(19) Europäisches Patentamt

European Patent Office

Office européen des brevets

(11) **EP 3 889 900 A1**

(12) **EUROPEAN PATENT APPLICATION**

(43) Date of publication:
06.10.2021 Bulletin 2021/40

(51) Int Cl.:
*G06T 7/30* *(2017.01)*

(21) Application number: 20167936.2

(22) Date of filing: 03.04.2020

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Imec VZW**
**3001 Leuven (BE)**

(72) Inventors:
• **CERBU, Dorin**
**3001 Leuven (BE)**

• **PAREDIS, Kristof**
**3001 Leuven (BE)**
• **LERAY, Philippe**
**3001 Leuven (BE)**
• **MOUSSA, Alain**
**3001 Leuven (BE)**
• **CHARLEY, Anne-Laure**
**3001 Leuven (BE)**

(74) Representative: **Roth, Sebastian**
**Mitscherlich PartmbB**
**Patent- und Rechtsanwälte**
**Sonnenstraße 33**
**80331 München (DE)**

(54) **DEVICE AND METHOD FOR CORRECTING DIRECTIONAL DRIFTS IN TOPOGRAPHIC IMAGE DATA**

(57)    The invention relates to a device (100) for correcting directional drifts in topographic image data, comprising a receiver (103) configured to receive the topographic image data in a raw data format, wherein the topographic image data comprises values representing spatial coordinates of a topography, and wherein the values are in a first range, a processor (105) configured to normalize said values of the topographic image data to a second range, and a trainable neural network (107) configured to receive the topographic image data with normalized values and to remove a directional drift of the normalized values, wherein, following removal of the directional drift by the neural network (107), the processor (105) is configured to denormalize the values, in particular to the first range, to generate corrected topographic image data.

Fig. 1

EP 3 889 900 A1

**Description**

TECHNICAL FIELD OF THE INVENTION

The present disclosure relates to a device and a method for correcting directional drifts in topographic image data.

BACKGROUND OF THE INVENTION

3D topography imaging systems, such as atomic force microscopes (AFMs) or profilometers, can be used to record topographic images of surfaces with micro- or nanometric resolutions. For instance, such systems are used for defect inspection and dimensional measurements of semiconductor devices.

However, often during the acquisition of a topographic image, a drift in vertical direction is superimposed on the recorded topography. This drift can be caused by imperfections or misalignments of the imaging system, e.g. drifts or non-linearities of a probe head or a piezo scanner of a profilometer. Further, the drift can be caused by the fact that the sample or a stage for the sample are not perfectly flat.

Such a drift represents an artefact in the topographic image that is difficult to remove. For instance, removal of the drift requires manual input and a subsequent assessment whether the removal was done appropriately. Hence, the correction may be time-consuming and may vary from image to image, depending on the operator.

SUMMARY OF THE INVENTION

Thus, it is an objective to provide an improved device and an improved method for correcting directional drifts in topographic image data. In particular, the above-mentioned disadvantages should be avoided.

The objective is achieved by the solution provided in the enclosed independent claims. Advantageous implementations of the present invention are further defined in the dependent claims.

According to a first aspect, the present disclosure relates to a device for correcting directional drifts in topographic image data, comprising: a receiver configured to receive the topographic image data in a raw data format, wherein the topographic image data comprises values representing spatial coordinates of a topography, and wherein the values are in a first range, a processor configured to normalize said values of the topographic image data to a second range, and a trainable neural network configured to receive the topographic image data with normalized values and to remove a directional drift of the normalized values, wherein, following removal of the directional drift by the neural network, the processor is configured to denormalize the values, in particular to the first range, to generate corrected topographic image data.

This achieves the advantage that directional drifts in the topographic image data can be corrected efficiently. In particular, this correction can be a faster, more accurate and more scalable (i.e. uniformly for different images) compared to a correction carried out by an operator. Hence, the correction of a topographic image can be automated.

Preferably, the topographic image data comprises raw data of a topographic image, in particular a 3D topographic image, of a surface, e.g. the surface of a wafer or a semiconductor device. In particular, the topographic image shows a topography of the surface. For example, the topographic image shows a surface which essentially extends over a horizontal xy-direction and which comprises structures that at least partially extend in a vertical z-direction.

The directional drift can be a vertical drift in the image data. In particular, the directional drift comprises a drift in z-direction perpendicular to an xy-direction in which the recorded surface extends. Alternatively or additionally, the directional drift can be a horizontal drift, e.g. the directional drift comprises a drift in x- and/or y-direction. The directional drift can be an unwanted artefact in the topographic image.

The directional drift can be superimposed on the spatial coordinates of the topography. The spatial coordinates can be three dimensional coordinates comprising x, y and z components. In particular, the spatial coordinates comprise z-values, i.e. coordinates in z-direction.

In particular, the topographic image data was recorded with a topography imaging system such as an atomic force microscope (AFM), a scanning tunneling microscope (STM), a mechanical profilometer, or an optical profilometer, e.g. an interferometry-based profiler. The directional drift can be caused by imperfections or misalignments of this imaging systems.

The device can be a data processing device, e.g. a computer. The receiver can comprise an interface for receiving the topographic image data. In particular, the receiver can be connected to the topographic imaging system via a communication link to directly receive the topographic image data. Alternatively, the receiver can comprise an interface for connecting a data storage, e.g. an USB interface, or a communication network for uploading the topographic image data.

In another embodiment, the device is integrated in a topography image system, e.g. an AFM. In this way the image system can generate already corrected topographic images.

The trainable neural network can be executed by a further processor of the device. Alternatively, the trainable neural network may be executed by the processor that performs the normalization. In particular, the neural network, preferably the processor in which the neural network is implemented, carries out a machine learning algorithm to correct the topographic image data.

Preferably, the second range is a range extending from a minimum of -1 to a maximum of +1.

In an embodiment, the processor is configured to normalize the values by centering said values around zero.

This achieves the advantage that the topographic image data can be normalized efficiently. In particular, the normalized image data can be better processed by the neural network which was trained with images having the same normalization.

In an embodiment, the processor is configured to normalize the values by subtracting a mean of the values from said values, and by subsequently dividing the values by an integer multiple of a standard deviation.

This achieves the advantage that the topographic image data can be normalized efficiently. In particular, the normalized image data can be better processed by the neural network which was trained with images having the same normalization.

In an embodiment, the processor is configured to denormalize the values by multiplying them with a factor.

This achieves the advantage that a corrected topographic image in the same range as the original image and with corrected drift can be generated efficiently.

In an embodiment, the processor is configured to determine the factor based on a spatial gradient of the values in the first range prior to the removal of the directional drift, and on a spatial gradient of the values in the second range after removal of the directional drift.

This achieves the advantage that the denormalization can be performed efficiently.

In an embodiment, the raw data format is an ASCII data format.

In an embodiment, the trainable neural network comprises a Generative Adversarial Network (GAN) or a convolutional neural network (CNN).

According to a second aspect, the present disclosure relates to a method for correcting directional drifts in topographic image data, comprising:

- receiving the topographic image data in a raw data format, wherein the topographic image data comprises values representing spatial coordinates of a topography, and wherein the values are in a first range,
- normalizing said values to a second range,
- removing a directional drift of the normalized values by a trainable neural network, and
- following removal of the directional drift, denormalizing the values, in particular to the first range, to generate corrected topographic image data.

This achieves the advantage that directional drifts in the topographic image data can be corrected efficiently. In particular, this correction can be a faster, more accurate and more scalable (i.e. uniformly for different images) compared to a correction carried out by an operator. Hence, the correction of a topographic image can be automated.

In an embodiment, the step of normalizing said values to the second range comprises centering said values around zero.

This achieves the advantage that the topographic image data can be normalized efficiently. In particular, the normalized image data can be better processed by the neural network which was trained with images having the same normalization.

In an embodiment, the step of normalizing said values to the second range further comprises subtracting a mean of the values from the values, and subsequently dividing the values by an integer multiple of a standard deviation.

This achieves the advantage that the topographic image data can be normalized efficiently. In particular, the normalized image data can be better processed by the neural network which was trained with images having the same normalization.

In an embodiment, the step of denormalizing the values comprises multiplying the corrected values by a factor.

This achieves the advantage that a corrected topographic image in the same range as the original image and with corrected drift can be generated efficiently.

In an embodiment, the factor is determined based on a spatial gradient of the values in the first range prior to the removal of the directional drift, and on a spatial gradient of the values in the second range after removal of the directional drift.

This achieves the advantage that the denormalization can be performed efficiently.

In an embodiment, the trainable neural network is trained by:

- providing training data in the raw data format, wherein the training data comprises further values representing spatial coordinates of a training topography,

- normalizing the further values,
- removing a directional drift of the normalized further values by the trainable neural network, and
- following removal of the directional drift, comparing the training data to reference data.

This achieves the advantage that the neural network can be trained efficiently based on suitable reference data.

In an embodiment, the trainable neural network is further trained by:

- determining a loss function, wherein the loss function represents a deviation between the training data after removal of the directional drift and the reference data, and
- adapting the trainable neural network to decrease the loss function.

This achieves the advantage that the neural network can be trained efficiently based on suitable reference data.

In an embodiment, the comparison of the training data after removal of the directional drift and the reference data is carried out by a further neural network.

This achieves the advantage that the neural network can be trained efficiently based on two neural networks.

The further neural network can be executed by the processor or the further processor of the device. Alternatively, the further neural network is implemented in another device.

The above description with regard to the device according to the first aspect of the present disclosure is correspondingly valid for the method according to the second aspect of the present disclosure.

According to a third aspect, the present disclosure relates to a computer program, which comprises a program code for performing the method according to the second aspect of the present disclosure when executed on a computer.

BRIEF DESCRIPTION OF THE DRAWINGS

The invention will be explained in the followings together with the figures.

Fig. 1       shows a schematic diagram of a device for correcting directional drifts in topographic image data according to an embodiment;

Fig. 2       shows a schematic diagram of the trained neural network of the device shown in Fig. 1, according to an embodiment;

Figs. 3      shows a normalization and a denormalization of values representing spatial coordinates of a topography according to an embodiment;

Fig. 4a-b    shows visual schematics of z-value parameters of topographic image data according to an embodiment;

Fig. 5       shows a schematic diagram of a method for correcting directional drifts in topographic image data according to an embodiment;

Fig. 6       shows a schematic diagram of a method for training a trainable neural network according to an embodiment; and

Fig. 7       shows a schematic diagram of a system for training a trainable neural network according to an embodiment.

DETAILED DESCRIPTION OF THE PREFERRED EMBODIMENTS

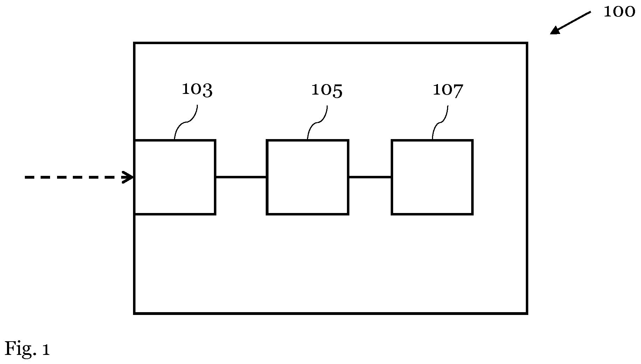

Figs 1 shows a schematic diagram of a device 100 for correcting directional drifts in topographic image data according to an embodiment.

The device 100 comprises a receiver 103 configured to receive the topographic image data in a raw data format, wherein the topographic image data comprises values representing spatial coordinates of a topography, and wherein the values are in a first range. The device 100 further comprises a processor 105 configured to normalize said values of the topographic image data to a second range, and a trainable neural network 107 configured to receive the topographic image data with normalized values and to remove a directional drift of the normalized values, wherein, following removal of the directional drift by the trainable neural network 107, the processor 105 is configured to denormalize the values, in particular to the first range, to generate corrected topographic image data.

The topographic image data can comprise raw data of a topographic image, in particular a 3D topographic image, of a surface. In particular, the topographic image shows a topography of a surface.

The directional drift can be a vertical drift in the image data. In particular, the directional drift comprises a drift in z-direction perpendicular to an xy-direction in which the surface extends. Alternatively or additionally, the directional drift can comprise a horizontal drift, e.g. a drift in x- and/or y-direction. The directional drift can be superimposed on the spatial coordinates of the topography.

The raw data format can be a data format with which the topography image system, e.g. an AFM, generates the topographic image data. For example, the raw data format is an ASCII data format. Using this raw data format allows preserving a vertical resolution in the image data which is especially important for 3D topographic image data. In particular, using raw data such as ASCII allows preserving the absolute values, e.g. in nm or Angstroms, of the spatial coordinates in the vertical z-direction. Thus, a loss of vertical resolution which may occur when encoding the image data using an image format such as jpeg or tiff can be avoided.

Alternatively, the raw data format can be a data format different to ASCII. For example, the raw data format can be any data format that preserves a height information of a topography and that comprises coordinates, in particular x-y-coordinates, of the topography at which heights, i.e. z-coordinates, were recorded. In particular, the raw data format can be a suitable document format that allows accessing the raw data and a transformation of said raw data into a matrix which comprises matrix elements representing topographical height information.

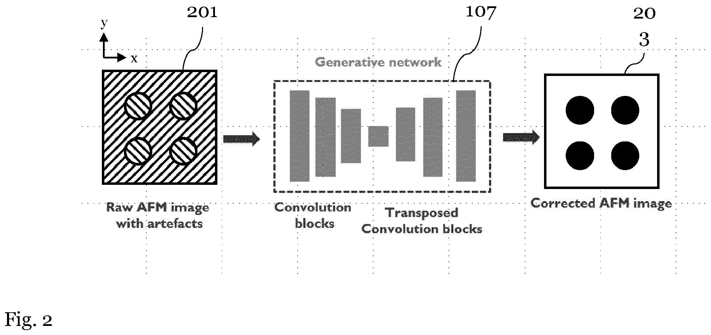

Fig. 2 shows a schematic diagram of the trained neural network 107 of the device 100 shown in Fig. 1, according to an embodiment.

The trained neural network 107 is configured to receive the topographic image data with the directional drift (degraded image) following the normalization of this data, and to generate the corrected topographic image data by removing the directional drift.

For example, the topographic image data comprises raw data of a topographic image 201 of a structured substrate, e.g. a substrate having pores extending along a z-direction. This topographic image 201 is superimposed by the directional drift which forms an artifact that degrades the quality of the image. The corrected topographic image data comprises data from a corrected version of the topographic image 203. In the corrected image 203 the artifact is removed.

In particular, the directional drift is an unwanted artefact in the topographic image data. The directional drift can comprise linear, parabolic or cubic shifts in the image data. The directional drift can further comprise random noise, streaks, spikes or single steps in the topographic image data.

The trainable neural network 107 can comprise Generative Adversarial Network (GAN). The GAN may comprise convolution blocks or layers. In particular, the CCN comprises an input layer, an output layer and hidden layers.

In particular, the GAN receives the topographic image data in the form of an input matrix, which may comprise pixel values of the topographic image. The GAN can calculate a sum of an element-wise multiplication of the input matrix and a kernel matrix or filter. This operation can retain positional connectivity between the input values and the output values while reducing a dimensionality of the input matrix. Thus, a convolved feature map of the input matrix can be generated by the neural network 107.

Alternatively, the trainable neural network 107 comprises a Convolutional Neural Network (CNN) or any other suitable type of neural network.

The trainable neural network 107 can be executed by a further processor of the device 100. Alternatively, the trainable neural network 107 maybe executed by the processor 103. In particular, the processor 103 comprises a microprocessor or microchip of the device 100.

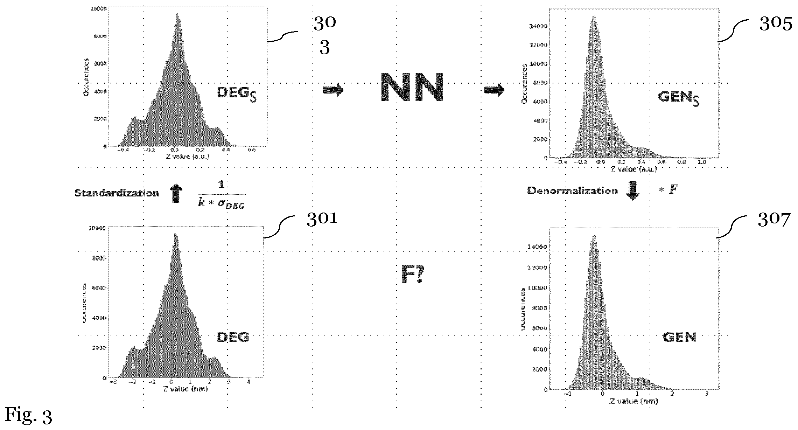

Fig. 3 shows a normalization and a denormalization of values representing spatial coordinates of the topography according to an embodiment. In particular, Fig. 3 shows the normalization and denormalization that is performed by the processor 105 prior to forwarding the values to the trainable neural network (NN) 107, respectively following the removal of the directional drift by the neural network (NN) 107.

A first plot 301 in Fig. 3 shows a distribution of z-values, i.e. the z-direction components of the spatial coordinates of the topography, in a first range. This z-values are spatial coordinates from degraded topographic image data (DEG) which has the directional drift. In particular, Fig. 3 shows the z-values of a line scan across the topographic image which, in the example shown in Fig. 3, range from -3 to 4 nm.

A second plot 303 in Fig. 3 shows a normalization of the z-values from plot 301. The values, e.g. two-dimensional arrays derived from the ASCII files, are normalized by centering the distribution of z-values around 0.

Preferably, this centering is achieved by subtracting a mean of the z-values and subsequently dividing the z-values by k*sigma, wherein sigma is the standard deviation of the z-values in the array and k is a factor of choice. For example, using k=6 ensures that most z-values with the exception of extreme outliers are normalized to the second range, which is between -1 and 1. This type of normalization has the advantage that it is not dependent on outliers. In particular, the normalization is a standardization and the generated data is standardized degraded topographic image data (DEGs).

A third plot 305 in Fig. 3 shows the normalized z-values of the corrected topographic image data (GENs) that is generated by the trained neural network 107.

The above described normalization ensures a high stability of the neural network 107 performance. In particular, the neural network 107 receives a standardized input in the same range as training data and generates a standardized output.

Subsequently, the z-values of the corrected topographic image data is denormalized, i.e. destandardized, back to the first range to generate the corrected topographic image data (GEN). The denormalized z-values are shown in a fourth plot 307 of Fig. 3. By means of this denormalization, the absolute z-values of the original topographic image data, e.g. in nm or Angstrom, can be restored.

The denormalization can be performed by multiplying the z-values of the image data by a factor F. This factor can be determined based on a spatial gradient of the z-values in the first range prior to the removal of the directional drift, and on a spatial gradient of the z-values in the second range after removal of the directional drift.

In the following, a detailed derivation of the factor F is shown:

The z-values of the degraded topographic image data ($Z_{DEG}$) can be assessed as a sum of z-values of a ground truth data ($Z_{GT}$), i.e. z-values of a topography without the directional drift, and the drift in z-direction ($Z_{ENV}$) which can expressed as envelope function on the ground truth data, according to:

$$Z_{DEG} = Z_{GT} + Z_{ENV}$$

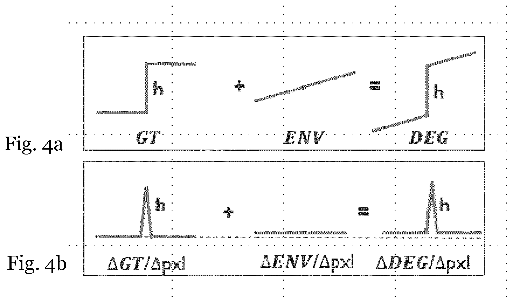

Fig. 4a shows a visual schematic of the parameters $Z_{DEG}$, $Z_{GT}$ and $Z_{ENV}$ according to an embodiment. The spatial derivatives of these values can be expressed according to the following relation:

$$\frac{\Delta Z_{DEG}}{\Delta p_{xl}} = \frac{\Delta Z_{GT}}{\Delta p_{xl}} + \frac{\Delta Z_{ENV}}{\Delta p_{xl}}$$

Here, $p_{xl}$ represents the pixels in the raw image data, wherein Z is the z-value at each pixel, i.e. the pixel height. Fig. 4b shows a visual schematic of the parameters $\Delta Z_{DEG}/\Delta p_{xl}$, $\Delta Z_{GT}/\Delta p_{xl}$ and $\Delta Z_{ENV}/\Delta p_{xl}$ according to an embodiment.

Since the spatial gradient of the envelope function is relatively small compared to the ground truth data, the following assessment can be made:

$$\frac{\Delta Z_{GT}}{\Delta p_{xl}} \gg \frac{\Delta Z_{ENV}}{\Delta p_{xl}} \implies \frac{\Delta Z_{DEG}}{\Delta p_{xl}} \approx \frac{\Delta Z_{GT}}{\Delta p_{xl}} = \frac{\Delta Z_{GEN}}{\Delta p_{xl}}$$

Here, $Z_{GEN}$ represents the z-values of the corrected and denormalized topographic image data. It can be assumed that the spatial gradients of $Z_{GEN}$ and $Z_{GT}$ are essentially identical. Further assuming a good correction performance of the neural network 107, it can be estimated that the ground truth z-values $Z_{GT}$ and the z-values $Z_{GEN}$ of the corrected image data are identical. Thus, the factor F can be derived in the following way:

$$Z_{GT} = Z_{GEN} = F * (Z_{GEN})_S,$$

wherein $(Z_{GEN})_S$ are the z-values of the topographic image data after removal of the directional drift and prior to denormalization, i.e. normalized z-values in the second range. A spatial derivation provides:

$$\frac{\Delta Z_{GT}}{\Delta p_{xl}} = F * \frac{\Delta (Z_{GEN})_S}{\Delta p_{xl}}$$

With the previous assumptions this can be rewritten as:

$$\frac{\Delta Z_{DEG}}{\Delta p_{xl}} \approx \frac{\Delta Z_{GEN}}{\Delta p_{xl}} = F * \frac{\Delta (Z_{GEN})_S}{\Delta p_{xl}},$$

which can be rearranged to derive a formula for the factor F:

$$F \approx \frac{\Delta(Z_{GEN})_S}{\Delta p_{xl}} \Big/ \frac{\Delta Z_{DEG}}{\Delta p_{xl}}$$

In particular, the first order spatial derivates preserve information on a relative difference between the first and second range which allows deriving the factor F. The factor F can be used to restore the absolute z-values of the corrected topographic image data to the first range, e.g. in nm or Angstrom.

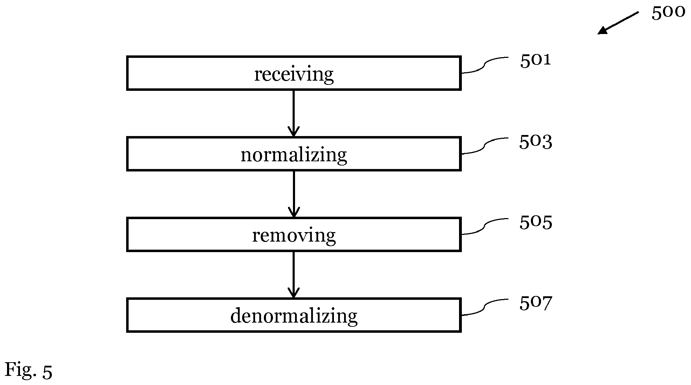

Fig. 5 shows a schematic diagram of a method 500 for correcting directional drifts in topographic image data according to an embodiment.

The method 500 comprises the following steps:

- receiving 501 the topographic image data in a raw data format, wherein the topographic image data comprises values representing spatial coordinates of a topography, and wherein the values are in a first range;
- normalizing 503 the values to a second range,
- removing 505 the directional drift of the normalized values by the trainable neural network 107, and
- following removal 505 of the directional drift, denormalizing 507 the values, in particular to the first range, to generate the corrected topographic image data.

Preferably, the step of normalizing 503 said values to the second range comprises centering said values around zero. In particular, the step of normalizing 503 said values to the second range further comprises subtracting the mean of the values from the values, and subsequently dividing the values by the integer multiple of a standard deviation.

In an embodiment, the step of denormalizing 507 the values comprises multiplying the corrected values by the factor F. Preferably, the factor F is determined based on the spatial gradient of the values in the first range prior to the removal of the directional drift, and on the spatial gradient of the values in the second range after removal of the directional drift. An exemplary derivation of the factor F is shown above.

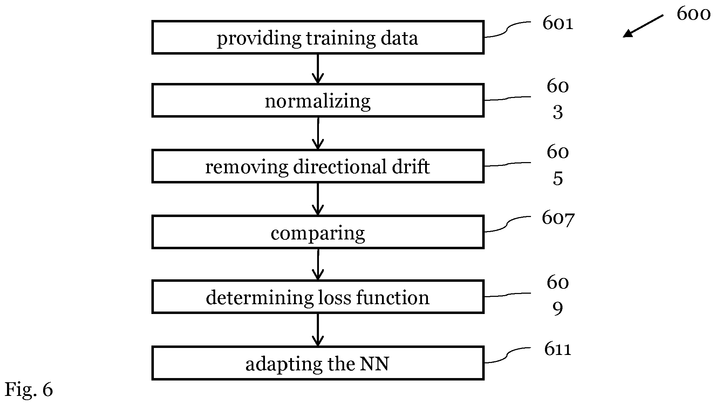

Fig. 6 shows a schematic diagram of a method 600 for training the trainable neural network 107 according to an embodiment.

The method 600 comprises the following steps:

- providing 601 training data in the raw data format, wherein the training data comprises further values representing spatial coordinates of a training topography,
- normalizing 603 the further values, in particular to the second range,
- removing 605 a directional drift of the normalized further values by the trainable neural network 107, and
- following removal 605 of the directional drift, comparing 607 the training data to reference data.

Preferably, the method 600 comprises the additional steps of:

- determining 609 a loss function, wherein the loss function represents a deviation between the training data after removal 605 of the directional drift and the reference data, and
- adapting 611 the trainable neural network 107 to decrease the loss function.

In particular, the method 500 for correcting directional drifts in topographic image data may comprise the method 600 for training the trainable neural network 107. Hence, all steps of the training method 600 are also steps of the method 500. For instance, the training steps 601-611 for the neural network 107 can be performed prior to method step 501.

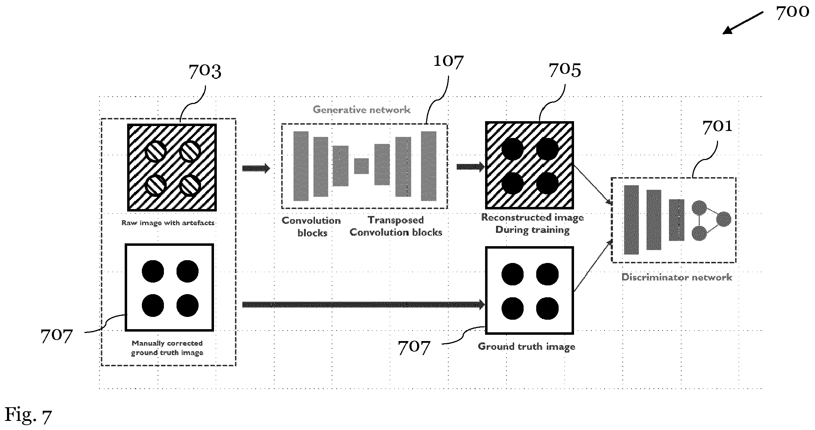

Fig. 7 shows a schematic diagram of a system 700 for training the trainable neural network 107 according to an embodiment.

The system 700 comprises the trainable neural network 107 and a further neural network 701. In particular, the further neural network 701 comprises a discriminator network.

During training, the trainable neural network 107 is fed with the training data, which comprises topographic image data from a degraded topographic image (DEG) 703, i.e. from a training topography. The DEG image 703 can be either a raw topographic image, e.g. an AFM image, that comprises the directional drift due to imperfections of the topography image system. Alternatively, the directional drift can be a simulated envelope that is superimposed on topographic image data. For instance, the envelope may simulate the following types of directional drift: linear shifts, parabolic shifts, cubic shifts, random noise, streaks, spikes, or single steps. Preferably, the z-values of the DEG image 703 are normalized to the second range, e.g. the range from -1 to 1.

The trained neural network 107 is configured to remove the directional drift from the image data of the topographic image 703 and generate image data of a reconstructed topographic image 705. The image data of this reconstructed topographic image 705 is subsequently compared to reference data. Preferably, the reference data comprises image data of a ground truth (GT) reference image 707, e.g. a topographic image of the same topography with, for instance, manually removed directional drift.

The further neural network 701 can be configured to compare the image data of the reconstructed topographic image 705 and the reference image 707, and to determine the loss function that represents a deviation between both images 705, 707. Ideally, this deviation is as small as possible. Subsequently, the trainable neural network can be adapted to decrease the loss function.

All features of all embodiments described, shown and/or claimed herein can be combined with each other.

**Claims**

1. Device (100) for correcting directional drifts in topographic image data, comprising:

   a receiver (103) configured to receive the topographic image data in a raw data format, wherein the topographic image data comprises values representing spatial coordinates of a topography, and wherein the values are in a first range,
   a processor (105) configured to normalize said values of the topographic image data to a second range, and
   a trainable neural network (107) configured to receive the topographic image data with normalized values and to remove a directional drift of the normalized values,
   wherein, following removal of the directional drift by the neural network (107), the processor (105) is configured to denormalize the values, in particular to the first range, to generate corrected topographic image data.

2. Device (100) according to claim 1, wherein the processor (105) is configured to normalize the values by centering said values around zero.

3. Device (100) according to claim 1 or 2, wherein the processor (105) is configured to normalize the values by subtracting a mean of the values from said values, and by subsequently dividing the values by an integer multiple of a standard deviation.

4. Device (100) according to any one of the preceding claims, wherein the processor (105) is configured to denormalize the values by multiplying them with a factor.

5. Device (100) according to claim 4, wherein the processor (105) is configured to determine the factor based on a spatial gradient of the values in the first range prior to the removal of the directional drift, and on a spatial gradient of the values in the second range after removal of the directional drift.

6. Device (100) according to any one of the preceding claims, wherein the raw data format is an ASCII data format.

7. Device (100) according to any one of the preceding claims, wherein the trainable neural network (107) comprises a Generative Adversarial Network, GAN, or a convolutional neural network, CNN.

8. Method (500) for correcting directional drifts in topographic image data, comprising:

   - receiving (501) the topographic image data in a raw data format, wherein the topographic image data comprises values representing spatial coordinates of a topography, and wherein the values are in a first range,
   - normalizing (503) said values to a second range,
   - removing (505) a directional drift of the normalized values by a trainable neural network (107), and
   - following removal (505) of the directional drift, denormalizing (507) the values, in particular to the first range, to generate corrected topographic image data.

9. Method (500) according to claim 8, wherein the step of normalizing (503) said values to the second range comprises centering said values around zero.

10. Method (500) according to claim 8 or 9, wherein the step of normalizing (503) said values to the second range further comprises subtracting a mean of the values from the values, and subsequently dividing the values by an integer multiple of a standard deviation.

**11.** Method (500) according to any one of claims 8 to 10, wherein the step of denormalizing (507) the values comprises multiplying the corrected values by a factor.

**12.** Method (500) according to claim 11, wherein the factor is determined based on a spatial gradient of the values in the first range prior to the removal (505) of the directional drift, and on a spatial gradient of the values in the second range after removal (505) of the directional drift.

**13.** Method (500) according to any one of claims 8 to 12, wherein the trainable neural network (107) is trained by:

- providing (601) training data in the raw data format, wherein the training data comprises further values representing spatial coordinates of a training topography,
- normalizing (603) the further values,
- removing (605) a directional drift of the normalized further values by the trainable neural network, and
- following removal (605) of the directional drift, comparing (607) the training data to reference data.

**14.** Method (500) according to claim 13, wherein the trainable neural network (107) is further trained by:

- determining (609) a loss function, wherein the loss function represents a deviation between the training data after removal (605) of the directional drift and the reference data, and
- adapting (611) the trainable neural network (107) to decrease the loss function.

**15.** Method (500) according to claim 13 or 14, wherein the comparison (607) of the training data after removal (605) of the directional drift and the reference data is carried out by a further neural network (701).

100

103    105    107

Fig. 1

Fig. 2

Fig. 3

EP 3 889 900 A1

Fig. 4a

Fig. 4b

Fig. 5

600

| providing training data | 601 |

↓

| normalizing | 603 |

↓

| removing directional drift | 605 |

↓

| comparing | 607 |

↓

| determining loss function | 609 |

↓

| adapting the NN | 611 |

Fig. 6

Fig. 7

Europäisches
Patentamt

European
Patent Office

Office européen
des brevets

## EUROPEAN SEARCH REPORT

Application Number

EP 20 16 7936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RAHE P ET AL: "Vertical and lateral drift corrections of scanning probe microscopy images", JOURNAL OF VACUUM SCIENCE AND TECHNOLOGY: PART B, AVS / AIP, MELVILLE, NEW YORK, NY, US, vol. 28, no. 3, 20 May 2010 (2010-05-20), pages C4E31-C4E38, XP012144167, ISSN: 1071-1023, DOI: 10.1116/1.3360909 * abstract * * page C4E31, paragraph II - page C4E32 * * page C4E33, paragraph IV - page C4E35 * ----- | 1-15 | INV. G06T7/30 |
| A | ROSTISLAV V LAPSHIN: "Automatic drift elimination in probe microscope images based on techniques of counter-scanning and topography feature recognition; Automatic drift elimination in probe microscope images", MEASUREMENT SCIENCE AND TECHNOLOGY, IOP, BRISTOL, GB, vol. 18, no. 3, 1 March 2007 (2007-03-01), pages 907-927, XP020118568, ISSN: 0957-0233, DOI: 10.1088/0957-0233/18/3/046 * abstract * * page 908, paragraph 2.1.1 - page 911 * * page 912, paragraph 2.3 - page 913, paragraph 2.4 * ----- | 1-15 | |

TECHNICAL FIELDS
SEARCHED (IPC)

G06T
G01Q
G02B

The present search report has been drawn up for all claims

| Place of search | Date of completion of the search | Examiner |
|---|---|---|
| Munich | 21 September 2020 | Zamuner, Umberto |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)